# EUROPÄISCHE PATENTSCHRIFT

(11) **EP 3 969 992 B1**
(45) Veröffentlichungstag und Bekanntmachung des Hinweises auf die Patenterteilung: **16.04.2025**
(21) Anmeldenummer: 21733099.2
(22) Anmeldetag: 10.06.2021
(51) Int. Cl.: G06F 3/01, G06F 3/0354, G06F 3/042, G06F 3/043, G06F 3/0362

(54) **VERFAHREN ZUM ERFASSEN EINER BEDIENEINGABE UND BEDIENVORRICHTUNG**
METHOD FOR DETECTING AN OPERATING INPUT, AND OPERATING DEVICE
PROCÉDÉ DE DÉTECTION D'UNE ENTRÉE DE COMMANDE ET DISPOSITIF DE COMMANDE UTILISATEUR

(30) Priorität: 22.06.2020 DE 102020003713
(43) Veröffentlichungstag der Anmeldung: 23.03.2022
(73) Patentinhaber: Mercedes-Benz Group AG, 70372 Stuttgart (DE)
(72) Erfinder: STAHL, Volker, 75382 Althengstett (DE); REISINGER, Jörg, 74369 Löchgau (DE)
(74) Vertreter: Novagraaf Group
(86) Internationale Anmeldenummer: PCT/EP2021/065653
(87) Internationale Veröffentlichungsnummer: WO 2021/259660

(56) Entgegenhaltungen:
- US-A1- 2007 236 450
- US-A1- 2007 236 450
- US-A1- 2011 248 916
- US-A1- 2011 248 916
- US-A1- 2014 118 127
- US-A1- 2014 118 127
- MA PING ET AL: "56-2: Optical Touch Screen Integrated With Fingerprint Recognition", SID SYMPOSIUM DIGEST OF TECHNICAL PAPERS, vol. 48, no. 1, 1 May 2017 (2017-05-01), Internet, pages 835 - 837, XP093235880, ISSN: 0097-966X, Retrieved from the Internet <URL:https://api.wiley.com/onlinelibrary/tdm/v1/articles/10.1002%2Fsdtp.11779> [retrieved on 20241219], DOI: 10.1002/sdtp.11779

## Beschreibung

Die Erfindung betrifft ein Verfahren zum Erfassen einer mit wenigstens einem Finger ausgeführten Bedieneingabe nach der im Oberbegriff von Anspruch 1 näher definierten Art. Außerdem betrifft die Erfindung eine Bedienvorrichtung zur Durchführung des erfindungsgemäßen Verfahrens.

Eine Sensorik zur Erfassung einer Bedieneingabe, wie sie bei dem erfindungsgemäßen Verfahren zum Einsatz kommen kann, ist beispielsweise aus der DE 10 2011 112 567 A1 der Anmelderin bekannt. Die dort beschriebene Bedienvorrichtung für ein Kraftfahrzeug umfasst eine Sendeeinheit zum Senden eines Signals zu dem Finger und wenigstens eine Empfangseinheit zum Empfangen eines Signals, welches der Finger reflektiert. Die Art der Signale ist dabei im Prinzip unerheblich, solange die entsprechenden Signale gesendet, von dem Finger reflektiert und von der Sensorik wieder empfangen werden können. Sie können insbesondere in Form optischer Signale ausgebildet sein, welche dann entsprechend von einer Kamera aufgenommen werden, sowohl im sichtbaren Bereich als auch im Infrarotbereich. Ferner sind Ultraschallsignale usw. denkbar. Die Sensorik ist dabei so ausgebildet, dass sie im Wesentlichen verschiedene Auflagepunkte einer Kontur des Fingers erfasst. Eine solcher Sensorik wird auch als optische Fingernavigation (OFN) bezeichnet oder ist beispielsweise als Fingerabdrucksensor ausgebildet.

Der Vorteil besteht im Wesentlichen darin, dass der Finger nicht wie bei einem Touchscreen auf einer größeren Oberfläche bewegt wird, sondern auf einer relativ kleinen Oberfläche verschoben und abgerollt wird. Der eigentliche Sensor ist dabei punkt- oder linienförmig beispielsweise in Form einer geraden Linie bei einem eindimensionalen Sensor oder in Form von zwei sich kreuzenden Linien bei einem zweidimensionalen Sensor.

Der Nachteil derartiger Sensoren besteht nun im Wesentlichen darin, dass eine Rückmeldung an den Bediener nicht oder nur schlecht zu realisieren ist, sodass die Rückmeldung typischerweise lediglich durch die Reaktion beispielsweise eines Computers auf die entsprechende Eingabe realisiert ist, was beispielsweise die Beobachtung eines Bildschirms durch die den Sensor nutzende Person notwendig macht, wenn diese ein Feedback möchte.

Zum weiteren Stand der Technik kann außerdem auf die US 2019/0354185 A1 hingewiesen werden. Diese beschreibt das Erzeugen einer stehenden Welle, welche über die gesamte Oberfläche beispielsweise eines Touchscreens verläuft und dadurch der an sich glatten Oberfläche des Touchscreens unterschiedliche Widerstände für einen Finger beim Überstreichen der Oberfläche entgegensetzt. Die an sich glatte Oberfläche lässt sich dadurch so in eine stehende Schwingung versetzen, dass ein Nutzer mit seiner Fingeroberfläche eine Art Riffelung von sich abwechselnden Wellentälern und Wellenbergen spürt und damit leichter seiner Bewegung eine bestimmte Wegstrecke zuordnen kann. Die genannte Schrift nutzt dann zusätzlich Verformungen in der stehenden Welle, um die Position des Fingers auf der Touchscreenoberfläche zu detektieren.

Die US2014/0118127 A1 offenbart eine Bedienvorrichtung, die auf einer Bedienoberfläche bei Berührung eine haptische Rückmeldung wie beispielsweise eine periodische Schwingung erzeugt. Die Frequenz der Schwingung wird in Abhängigkeit der auf der Bedienoberfläche berührten Position verändert.

Aus der US2007/0236450 A1 ist weiter eine Bedienvorrichtung bekannt, die durch Modulation der Reibung zwischen Bedienfinger und Bedienoberfläche ein haptisches Feedback mit virtuellen Texturempfindungen erzeugt. Das haptische Feedback wird in Abhängigkeit einer Berührposition bestimmt, darüber hinaus können auch Ableitungen der erfassten Fingerposition wie Geschwindigkeit und/oder Beschleunigung, erfasster Fingerdruck und/oder erfasste Bewegungsrichtung des Fingers mit einbezogen werden.

Die US 2011/0248916 A1 offenbart eine Bedienvorrichtung bei der eine taktile Rückmeldung mit einer ersten Eigenschaft bereitgestellt wird, wenn die Berührung an einer ersten Position erfolgt, die einer ersten Auswahloption zugeordnet ist. Eine taktile Rückmeldung mit einer zweiten Charakteristik wird bereitgestellt, sobald die Berührung an einer zweiten, nicht der ersten Auswahloption zugeordneten Stelle erfasst wird. Das taktile Feedback wie beispielsweise eine Vibration kann in Abhängigkeit weiterer Kriterien verändert werden, beispielsweise Informationsarten, Abstände eines Bedienmittels zu einer Auswahloption, Voreinstellungen, Nutzerprofile, historische Nutzerdaten, Bedienkräfte oder Bedienart.

Ma Ping ET AL: "56-2: Optical Touch Screen Integrated With Fingerprint Recognition" (SID Symposium Digest of Technical Papers, Bd. 48, Nr. 1, 1. Mai 2017) beschreibt eine mögliche Integration eines optischen Touchpads mit einem Fingerabdrucksensor.

Die Aufgabe der hier vorliegenden Erfindung besteht nun darin, ein Verfahren zum Erfassen einer Bedieneingabe mit einem Sensor in der eingangs genannten Art und Weise weiter zu verbessern und außerdem eine hierfür geeignete Bedienvorrichtung anzugeben.

Erfindungsgemäß wird diese Aufgabe durch ein Verfahren mit den Merkmalen im Anspruch 1, und hier insbesondere im kennzeichnenden Teil des Anspruchs 1, gelöst. Vorteilhafte Ausgestaltungen und Weiterbildungen des Verfahrens ergeben sich aus den hiervon abhängigen Unteransprüchen. Eine Bedienvorrichtung zur Durchführung des erfindungsgemäßen Verfahrens ist im Anspruch 6 angegeben. Auch bezüglich der Bedienvorrichtung ergeben sich vorteilhafte Ausgestaltungen und Weiterbildungen aus den hiervon abhängigen Unteransprüchen.

Das erfindungsgemäße Verfahren dient zum Erfassen einer mit wenigstens einem Finger ausgeführten Bedieneingabe durch das Erkennen verschiedener Auflagepunkte einer Kontur des Fingers über eine Sensorik an einer Sensoroberfläche. Diese als Fingerabdrucksensor ausgeführte Sensorik hat wenigstens eine Sendeeinheit zum Senden eines Signals zu dem Finger und wenigstens eine Empfangseinheit zum Empfangen eines vom Finger reflektierten Signals. Der Sensor ist also nicht als großflächige berührungsempfindliche Oberfläche ausgeführt, sondern als weitgehend punktueller Sensor, welcher eine Abrollbewegung und/oder Schiebebewegung eines Fingers über den Sensor entsprechend erfasst, wie es beispielsweise bei Fingerabdrucksensoren oder sogenannten optischen Fingernavigationssensoren der Fall ist. Dies hat den Vorteil, dass der Sensor außerordentlich klein realisiert werden kann und eine Bewegung in einer oder zwei Dimensionen, welche insbesondere senkrecht aufeinander stehen können und dadurch eine flächige Bewegungsauflösung erlauben, wahrnehmen kann.

Erfindungsgemäß ist es nun so, dass die Sensoroberfläche mit wenigstens einem Aktuator in Flächenschwingungen versetzt wird, durch welche der Reibungswiderstand zwischen dem Finger und der Sensoroberfläche sich abhängig von den wechselnden Auflagepunkten der Kontur des Fingers, also letztlich der Abrollbewegung auf und/oder Schiebebewegung des Fingers über die punktuelle Sensoroberfläche, verändert. Hierdurch ist erstmals eine haptische Rückmeldung an den Nutzer möglich, da die unterschiedlichen Reibungen durch den Finger ertastet bzw. gespürt werden können, und unabhängig von optischen oder akustischen Signalen ein zuverlässiges Feedback an den Nutzer ermöglichen.

Gemäß einer vorteilhaften Weiterbildung der Idee kann dies jedoch zusätzlich von optischen und/oder akustischen Signalen zur Generierung eines Feedbacks unterstützt werden, wobei das haptische Feedback bei dem erfindungsgemäßen Verfahren im Vordergrund steht und durch das Einbringen von Schwingungen in die Sensoroberfläche realisiert wird.

Bei dem erfindungsgemäßen Verfahren wird die Flächenschwingung zeitlich so verändert, dass sich im Bereich unterhalb der Auflagepunkte des Fingers auf der Sensoroberfläche eine Abfolge von größeren und kleineren Schwingungsamplituden und/oder Frequenzen ergibt. Über die Frequenzen oder insbesondere die Schwingungsamplituden lässt sich der Reibungswiderstand zwischen dem Finger und der Sensoroberfläche entsprechend verändern, da eine durch die Schwingungen weiter in Richtung des Fingers bewegte Sensoroberfläche dem Finger einen größeren Reibungswiderstand entgegensetzt, als eine weiter vom Finger entfernte Oberfläche. Dieser Effekt lässt sich direkt durch eine Ansteuerung von Schwingungsamplituden und ergänzend oder alternativ dazu auch durch eine Veränderung der Frequenzen und ein beispielsweise daraus resultierendes Resonanzverhalten der Sensoroberfläche oder Teile derselben erreichen.

Eine sehr vorteilhafte Ausgestaltung des erfindungsgemäßen Verfahrens kann es ferner vorsehen, dass die Veränderung der Flächenschwingungen in dem Bereich unterhalb der Auflagepunkte des Fingers schlagartig, kontinuierlich oder nach einer vorgegebenen Funktion erfolgt, jeweils um die Darstellung eines gewünschten haptischen Effekts zu erreichen. Das haptische Empfinden wird dabei von einer unterschiedlichen Aufeinanderfolge von verschiedenen Reibungswiderständen bzw. -kräften während des mit einer Gleit- oder Schiebebewegung verbundenen Abrollens des Fingers auf der Sensoroberfläche erreicht. Je nach gewünschtem haptischem Effekt kann der Übergang zwischen den einzelnen Reibungswiderständen und damit letztlich zwischen den Schwingungen, welche diese verursachen, verschiedenartig ausgestaltet werden. So können beispielsweise schlagartige Übergänge erzeugt werden, welche beispielsweise das Einrasten eines Tasters, das Bewegen eines walzenförmigen Drehschalters um eine Raste oder dergleichen als gewünschte haptische Effekte simulieren. Andere Effekte lassen sich leichter über Rampen oder Kurven der Veränderung der Schwingungsamplituden und/oder Frequenzen realisieren, beispielsweise die Simulation der Bewegung eines Trackballs, eines Joysticks mit zunehmendem Widerstand, je weiter die Bewegung geht oder dergleichen.

Gemäß der vorliegenden Erfindung wird die Flächenschwingung zeitlich so verändert, dass die Veränderung der Flächenschwingungen in der Art erfolgt, dass durch das An- und Abschwellen von Schwingungsamplituden und/oder Frequenzen der Reibungswiderstand bzw. die Reibungskräfte in der Art verändert wird, dass der Effekt einer in einer oder zwei Dimensionen drehbaren Walze mit einer Rastung ihrer Drehbewegung haptisch nachgebildet wird. Dies führt zu einer sehr einfachen und effizienten Anwendung, wie sie beispielsweise im Cockpit eines Fahrzeugs genutzt werden kann. Eine Walze lässt sich so auf dem minimalen Bauraum, welcher durch die Sensoroberfläche benötigt wird, einfach und effizient nachbilden. Ein Nutzer kann, beispielsweise auch während er sich auf das Verkehrsgeschehen konzentriert, lediglich über das haptische Feedback diese Walze, vorzugsweise mit einer Rastung ihrer Drehbewegung, betätigen, um so beispielsweise Helligkeitseinstellungen, eine Leuchtweitenregulierung, eine Einstellung an einem Multimediagerät, eine Menüauswahl oder ähnliches vorzunehmen. Der Aufbau ist dabei mechanisch außerordentlich einfach und robust, da keinerlei beweglichen Teile notwendig sind. Dennoch kann über das durch das verfassungsgemäße Verfahren erstmals mögliche haptische Feedback eine außerordentlich realistische Darstellung einer solchen drehbaren Walze realisiert werden, welche von dem Nutzer genau in der Art wahrgenommen wird, wie er eine mechanische Walze ebenfalls wahrnehmen würde. Dies kann dabei in einer Dimension erfolgen, also mit einer Drehrichtung in lediglich einer Ebene, oder auch als zweidimensionale Walze, welche sowohl in der einen als auch in der anderen beispielsweise senkrecht darauf stehenden Richtung entsprechend bewegt werden kann.

Eine außerordentlich günstige Weiterbildung des erfindungsgemäßen Verfahrens kann es außerdem vorsehen, dass eine Anpassung der Veränderung der Schwingungsamplituden und/oder Frequenzen anhand eines Weg-Zeit-Diagramms der Bewegung der Auflagepunkte der Kontur des Fingers auf der Sensoroberfläche adaptiv erfolgt. Eine solche adaptive Anpassung beispielsweise der Größe der Schwingungsamplituden wird möglich, da durch den Sensor quasi ein Weg-Zeit-Diagramm der Schiebe- und/oder Abrollbewegung der Kontur des Fingers auf der Sensoroberfläche aufgenommen wird. Entspricht dieses Weg-Zeit-Diagramm der erwartenden Bewegung, beispielsweise einer Bewegung einer gerasterten Walze, dann wird dieses Weg-Zeit-Diagramm in etwa dem gewollten haptischen Feedback und damit dem durch die Flächenschwingung erzeugten Ablauf folgen. Ist dies nicht der Fall, und ist die über das Weg-Zeit-Diagramm erfasste Bewegung nicht so wie es durch den gewünschten haptischen Effekt zu erwarten wäre, ist sie insbesondere so, dass die Bewegung des Fingers deutlich gleichförmiger ist als es zu erwarten ist, dann ist offensichtlich das gewünschte haptische Feedback vom Nutzer nicht ausreichend wahrgenommen worden. Deshalb kann nun durch eine Vergrößerung der Veränderung der Schwingungsamplituden und/oder Frequenzen das haptische Feedback noch deutlicher gestaltet werden. Ist die Bewegung dagegen übertrieben stark ausgebildet oder abgehackt, dann kann das haptische Feedback in seiner Stärke auch reduziert werden. Dafür wird z.B. die Änderung der Schwingungsamplitude reduziert. Die Veränderung erfolgt dabei adaptiv so, dass letztlich abhängig von dem Nutzer eine Anpassung in der Art erfolgen kann, dass dieser je nach eigener Empfindlichkeit seiner Finger das in etwa selbe haptische Feedback zu spüren bekommt, um so verschiedenen Personen durch die adaptive Anpassung nach kurzer Bedienungszeit immer in etwa dasselbe haptische Feedback bereitzustellen.

Wie oben bereits erwähnt können zusätzlich zum haptischen Feedback zumindest einige der Veränderungen in den Schwingungsamplituden und/oder Frequenzen ergänzend von akustischen und/oder optischen Signalen begleitet werden. Diese lassen sich beispielsweise über einen Lautsprecher im Falle von akustischen Signalen oder über optische Mittel wie beispielsweise ein Display, Leuchtelemente oder dergleichen darstellen. Bevorzugt wird beispielsweise das durch den Reibungsverlauf simulierte Einrasten der vorab genannten Walzenfeedbacks durch ein einer mechanischen Walze entsprechendes Einrastgeräusch unterstützt. Bei den optischen Signalen ist es prinzipiell auch denkbar, im Falle einer optischen Erfassung des Fingers über das Aussenden von sichtbarem Licht dieses Licht gleichzeitig für ein optisches Feedback mit zu verwenden, beispielsweise durch zusätzliche Abstrahlfenster im Bereich der Sensoroberfläche oder in Bereichen neben der Sensoroberfläche.

Die erfindungsgemäße Bedienvorrichtung zur Durchführung des genannten Verfahrens in einer der Ausgestaltungen umfasst nun eine solche Sensorik zum Erkennen verschiedener Auflagepunkte einer Kontur des Fingers an der Sensoroberfläche, welche eine Sendeeinheit zum Senden eines Signals zu dem Finger und wenigstens eine Empfangseinheit zum Empfangen eines vom Finger reflektierten Signals aufweist. Erfindungsgemäß ist es dabei vorgesehen, dass wenigstens zwei Seitenkantern der Sensoroberfläche mit jeweils wenigstens einem Piezoaktuator zumindest mittelbar verbunden sind. Über diese wenigstens zwei Piezoaktuatoren lassen sich so Schwingungen in die Oberfläche des Sensors, welcher gemäß einer sehr vorteilhaften Weiterbildung der erfindungsgemäßen Bedienvorrichtung als optischer Fingernavigationssensor oder als Fingerabdrucksensor ausgebildet ist, einbringen. Auf außerordentlich kleinem Bauraum lässt sich so sehr effizient eine Bedienvorrichtung aufbauen, über welche beispielsweise eine Menüsteuerung oder dergleichen umgesetzt werden kann, wobei durch das direkte haptische Feedback eine einfache, effiziente und weitgehend intuitive Bedienung möglich ist.

Gemäß einer sehr vorteilhaften Ausgestaltung der erfindungsgemäßen Bedienvorrichtung kann es dabei vorgesehen sein, dass zwei gegenüberliegende Seitenkanten und zwei sich senkrecht dazu gegenüberliegende Seitenkanten der Sensoroberfläche mit jeweils wenigstens einem Piezoaktuator zumindest mittelbar verbunden sind. Diese Anordnung, bei welcher die sich senkrecht gegenüberliegenden Seitenkanten der Sensoroberfläche über den Aktuator zu Schwingungen angeregt werden können, erlauben nun die Realisierung des beim erfindungsgemäßen Verfahren bereits angesprochenen Aufbaus einer beispielsweise zweidimensionalen Walze eines Joysticks oder dergleichen, da in beide Flächenrichtungen der Sensoroberfläche die entsprechenden Schwingungen erzeugt und dem Finger unterschiedliche Reibungswiderstände bzw. Reibungskräfte entgegengesetzt werden können.

Die Bedienvorrichtung kann dabei gemäß einer sehr günstigen Weiterbildung der Erfindung außerdem Einrichtungen zur zumindest mittelbaren Ausgabe von akustischen und/oder optischen Signalen vorsehen, sodass ergänzend zum haptischen Feedback ein akustisches oder optisches Feedback möglich wird. Dies kann unmittelbar im Bereich des Sensors erfolgen, wie es oben beim optischen Feedback durch Lichtsignale bereits beschrieben worden ist. Es kann jedoch auch indirekt erfolgen, indem der Sensor mittelbar für die geeignete Ausgabe sorgt, beispielsweise indem Signale zur Erzeugung eines akustischen Feedbacks an eine Medienanlage ausgegeben werden, welche diese über die mit ihr verbundenen Lautsprecher entsprechend abspielt, insbesondere beim Einsatz in einem Fahrzeug.

Das nun bereits mehrfach angesprochene Fahrzeug ist dabei auch der bevorzugte Einsatzzweck einer derartigen Bedienvorrichtung und damit des eingangs beschriebenen Verfahrens gemäß der Erfindung in einer oder mehreren der dargestellten Ausführungsformen. Insbesondere dort ist eine kleine Bedienvorrichtung, die ein haptisches Feedback liefert, sehr vorteilhaft, so dass der Nutzer sich während der Bedienung weiter auf den Verkehr konzentrieren kann.

Weitere vorteilhafte Ausgestaltungen des Verfahrens sowie der Bedienvorrichtung ergeben sich auch aus dem Ausführungsbeispiel, welches nachfolgend unter Bezugnahme auf die Figuren näher dargestellt ist.

Dabei zeigen:
- Fig. 1: eine Prinzipdarstellung einer Sensorik und ihrer Betätigung;
- Fig. 2: eine Darstellung der Sensoroberfläche mit Aktuatoren zur Erzeugung einer Flächenschwingung;
- Fig. 3: eine schematische Darstellung einer Betätigung einer Walze mit zugehörigem Kraftverlauf; und
- Fig. 4: die Umsetzung des Ausführungsbeispiels aus Fig. 3 in das erfindungsgemäße Bedienelement.

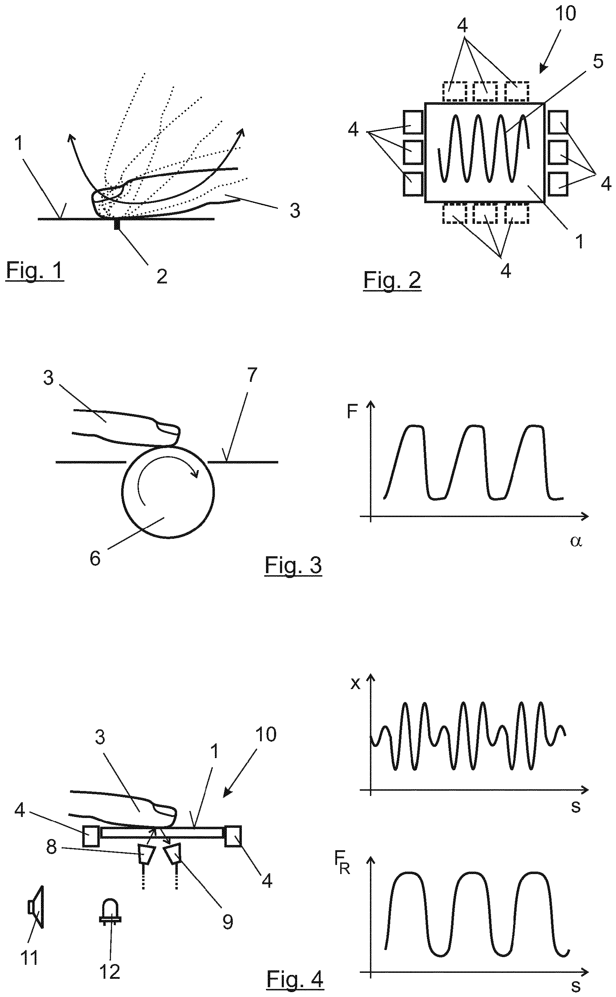

In der Darstellung der Figur 1 ist eine schematische Darstellung einer Oberfläche 1 mit einem Sensor 2 zu erkennen, welcher verschiedene Auflagepunkte einer Kontur eines Fingers 3 erkennt, welcher im Wesentlichen in einer teils streichenden/schiebende teils abrollenden Bewegung über den Sensor 2 geführt wird, wie es durch den Pfeil und die punktierten Darstellungen des Fingers zu einem späteren Zeitpunkt der Bewegung angedeutet ist. ein solcher Sensor 2 wird häufig als optischer Fingernavigationssensor (OFN) oder als Fingerabdrucksensor bezeichnet bzw. als solcher eingesetzt. Der Aufbau und die Betätigung entsprechen dabei soweit dem Stand der Technik. Der Vorteil liegt in der Möglichkeit, den Sensor 2 entsprechend klein zu bauen, beispielsweise bei einer eindimensionalen Erfassung linienförmig oder bei einer Erfassung einer Bewegung auch senkrecht zur Blattebene entsprechend aus zwei sich kreuzenden linienförmigen Teilen. Dies ermöglicht eine sehr kleine Sensoroberfläche.

In der Darstellung der Figur 2 ist die Oberfläche 1 einer solchen Bedienvorrichtung 10 nochmals in der Draufsicht schematisch angedeutet. Diese nachfolgend als Sensoroberfläche 1 bezeichnete Fläche ist an wenigstens zwei, vorzugweise an allen vier ihrer Seitenkanten mit entsprechenden Aktuatoren 4 -vorzugsweise Piezoaktuatoren 4-versehen, welche eine hier schematisch angedeutete Flächenschwingung 5 in die Sensoroberfläche 1 einbringen können, um so bei einer Berührung der Sensoroberfläche 1 mit dem Finger 3 durch die unterschiedlichen Schwingungszustände unterschiedliche Reibungswiderstände bzw. -Kräfte F_{R} zu erzeugen. Hierdurch ist ein haptisches Feedback der Betätigung einer solchen Sensorik in dem insgesamt als Bedienelement 10 bezeichneten Aufbau möglich.

Nachfolgend soll dies am Beispiel der Betätigung einer Walze, rein beispielhaft in einer Dimension, wobei bei der Anordnung von Piezoaktuatoren 4 an allen vier Seiten der Sensoroberfläche 1, dies auch in zwei Dimensionen entsprechend ausgedehnt werden kann.

In der Darstellung der Figur 3 ist nun beispielhaft eine Walze 6 in einer Oberfläche 7 angedeutet. Diese wird von dem Finger 3 entsprechend bewegt, beispielsweise indem sie um einen Drehwinkel α gedreht wird, insbesondere in der Darstellung der Figur 3 in Pfeilrichtung. Die Walze 6 selbst soll dabei eine mechanische Rastung aufweisen, sodass die Bewegung der Walze 6 in einzelnen aufeinanderfolgenden Bewegungen erfolgt, welche dazwischen durch die jeweilig Rastung und eine damit einhergehende Erhöhung der Reibung unterbrochen werden. Die dabei auftretende Kraft F ist in der Darstellung der Figur 3 rechts in einem Diagramm über dem Drehwinkel α für beispielsweise drei Rastungen aufgezeichnet. Der mechanische Aufbau der Walze 6 mit ihrer Rastung ergibt also über dem Drehwinkel α den in Figur 3 rechts dargestellten Kraftverlauf, welcher bei einem mechanischen Aufbau so ein unmittelbares Feedback an den Finger 3 und damit letztlich an den Nutzer, welcher mit seinem Finger 3 die Walze 6 bedient, liefert.

Dieser Aufbau und das haptische Feedback lassen sich nun durch die Bedienvorrichtung 10 einfach und effizient, ohne mechanische Bauteile, welche verschleißen könnten, entsprechend nachbilden. In der Darstellung der Figur 4 ist wiederum der Finger 3 zu erkennen, welcher sich über der Bedienvorrichtung 10 befindet und diese in der wie bei der optischen Fingernavigation üblichen Art und Weise entsprechend betätigt, indem der Finger 3 hier wiederum beispielhaft in einer Dimension über der Sensoroberfläche 1 bewegt, insbesondere teils gestrichen und teils abgerollt wird. Von der eigentlichen Sensorik sind hier unterhalb der Sensoroberfläche 1 eine Sendeeinheit 8 zum Aussenden eines Signals und eine Empfangseinheit 9 zum Empfangen des von dem Finger 3 reflektierten Signals zu erkennen. Auf den detaillierten Aufbau wird nicht weiter eingegangen, dieser kann beispielsweise der eingangs genannten gattungsgemäßen Schrift der Anmelderin entnommen werden.

Zusätzlich zum an sich bekannten Aufbau der Sensorik sind hier nun die Piezoaktuatoren 4, von welchen hier zwei zu erkennen sind, vorhanden. Diese sind direkt oder mittelbar mit der Sensoroberfläche 1 verbunden und können die oben bereits angedeutete Flächenschwingung 5 in die Sensoroberfläche 1 einbringen. Je nach gewünschtem haptischem Feedback durch die Sensoroberfläche 1 wird diese Flächenschwingung 5 nun entsprechend angepasst. Soll beispielsweise das haptische Feedback der Walze 6, wie es in der Darstellung der Figur 3 erläutert worden ist, erzeugt werden, so werden die Schwingungen beispielsweise entsprechend des in Figur 4 rechts oben gezeigten Diagramms realisiert. In diesem Diagramm ist die Amplitude x der Flächenschwingung 5 über dem Weg s des Streichens und/oder Abrollens des Fingers 3 bzw. seiner Fingerkuppe über der Sensoroberfläche 1 aufgezeigt. Dabei wird zwischen Schwingungen mit unterschiedlichen Amplituden gewechselt, und zwar so, dass die Reibungskraft F_{R} des Fingers 3 auf der Sensoroberfläche 1 bei seiner Bewegung sich in der in der Figur 4 rechts unten dargestellten Art und Weise einstellt. Hierdurch lässt sich relativ genau das mechanische Verhalten der Walze 6 als haptisches Feedback der Bedienvorrichtung 10 auf den Finger 3 realisieren.

Ergänzend zu dem rein haptischen Feedback über die Flächenschwingung 5 der Sensoroberfläche 1 lässt sich ergänzend eine Änderung der Flächenschwingung 5, beispielsweise eine Veränderung der Schwingungsamplituden, auch über akustische und/oder optische Signale mit anzeigen, welche das haptische Feedback ergänzen bzw. begleiten. Um dies anzudeuten, sind in der Figur 4 unterhalb der Bedienvorrichtung 10 rein beispielhaft ein Lautsprecher 11 als Symbol für das zusätzliche mögliche akustische Feedback und eine LED 12 (lichtemittierende Diode) als Symbol für ein mögliches zusätzliches optisches Feedback angedeutet. Neben reinen Lichtsignalen über die angedeutete LED 12 kann das optische Feedback auch über eine Darstellung auf einem Bildschirm erfolgen, beispielsweise indem ein dort befindliches Menü weitergeschaltet und der nächste Menüpunkt entsprechend als angewählt dargestellt wird oder dergleichen. All dies würde im Sinne dieser Beschreibung unter das optische Feedback fallen.

Mit minimalem Bauraum und ohne die Notwendigkeit mechanische Teile zu verbauen, deren Drehung oder andersartige Bewegung erfasst werden muss, lässt sich nun sehr einfach ein optischer Fingernavigationssensor mit einem zuverlässigen haptischen Feedback kombinieren. Das haptische Feedback lässt sich dabei durch eine Anpassung der Schwingungsamplitude x und/oder der Frequenz der Schwingung annähernd beliebig anpassen, um so beispielsweise die genannte Walze 6 oder auch jede andere Art von mechanischer Bewegung durch eine Variation der Reibungskraft F_{R} zwischen dem Finger 3 und der Sensoroberfläche 1 einzustellen. Hierdurch kann beispielsweise eine Walze 6, ein Taster, ein Joystick, ein Trackball oder dergleichen bezüglich seines Feedbacks durch das haptische Feedback, welches durch die Flächenschwingung 5 in der Sensoroberfläche 1 erzeugt wird, nachgebildet werden.

## Patentansprüche

1. Verfahren zum Erfassen einer mit wenigstens einem Finger (3) ausgeführten Bedieneingabe durch das Erkennen verschiedener Auflagepunkte einer Kontur des Fingers (3) über eine Sensorik an einer Sensoroberfläche (1), mit wenigstens einer Sendeinheit (8) zum Senden eines Signals zu dem Finger (3) und wenigstens einer Empfangseinheit (9) zum Empfangen eines vom Finger (3) reflektierten Signals, wobei in die Sensoroberfläche (1) der als Fingerabdrucksensor ausgeführten Sensorik mit wenigstens einem Aktuator (4) eine Flächenschwingung (5) eingebracht wird, durch welche der Reibungswiderstand (F_{R}) zwischen dem Finger (3) und der Sensoroberfläche (1) sich abhängig von den wechselnden Auflagepunkten der Kontur des Fingers (3) verändert, wobei die Flächenschwingung (5) zeitlich so verändert wird, dass sich im Bereich unterhalb der Auflagepunkte des Fingers (3) auf der Sensoroberfläche (1) eine Abfolge von größeren und kleineren Schwingungsamplituden (x) und/oder Frequenzen ergibt.

2. Verfahren nach Anspruch 1,
**dadurch gekennzeichnet, dass**
die Veränderung der Flächenschwingung (5) in dem Bereich unterhalb der Auflagepunkte des Fingers (3) auf der Sensoroberfläche (1) schlagartig, kontinuierlich oder nach einer vorgegebenen Funktion, jeweils zur Darstellung eines gewünschten haptischen Effekts, vorgenommen wird.

3. Verfahren nach Anspruch 1 oder 2,
**dadurch gekennzeichnet, dass**
die Veränderung der Flächenschwingung (5) in der Art erfolgt, dass durch das An- und Abschwellen von Schwingungsamplituden (x) und/oder Frequenzen der Reibungswiderstand (F_{R}) in der Art verändert wird, dass der Effekt einer in einer oder in zwei Dimensionen drehbaren Walze (6) mit einer Rastung ihrer Drehbewegung (α) haptisch nachgebildet wird.

4. Verfahren nach einem der Ansprüche 1 bis 3,
**dadurch gekennzeichnet, dass**
eine Anpassung der Veränderung der Schwingungsamplituden (x) und/oder Frequenzen anhand eines Weg-Zeit-Diagramms der Bewegung der Auflagepunkten der Kontur des Fingers (3) auf der Sensoroberfläche (1) adaptiv erfolgt, wozu zumindest bei einer nicht dem gewünschten haptischen Effekt entsprechenden Bewegung die Veränderung vergrößert wird.

5. Verfahren nach Anspruch einem der Ansprüche 1 bis 4,
**dadurch gekennzeichnet, dass**
zumindest einige der Veränderungen der Schwingungsamplituden (x) und/oder Frequenzen ergänzend von akustischen und/oder optischen Signalen begleitet werden.

6. Bedienvorrichtung (10) zur Durchführung des Verfahrens nach einem der Ansprüche 1 bis 5,
mit einer Sensorik zum Erkennen verschiedener Auflagepunkte einer Kontur des Fingers (3) an der Sensoroberfläche (1), umfassend eine Sendeinheit (8) zum Senden eines Signals zu dem Finger (3) und wenigstens einer Empfangseinheit (9) zum Empfangen eines vom Finger (3) reflektierten Signals,
wobei
wenigstens zwei Seitenkanten der Sensoroberfläche (1) der als Fingerabdrucksensor ausgeführten Sensorik mit jeweils wenigstens einem Piezoaktuator (4) zumindest mittelbar verbunden sind, wobei die Piezoaktuatoren (4) eine Flächenschwingung derart einbringen, dass sich der Reibungswiderstand (F_{R}) zwischen dem Finger (3) und der Sensoroberfläche (1) abhängig von den wechselnden Auflagepunkten der Kontur des Fingers (3) verändert, wobei
die Flächenschwingung (5) zeitlich so verändert wird, dass sich im Bereich unterhalb der Auflagepunkte des Fingers (3) auf der Sensoroberfläche (1) eine Abfolge von größeren und kleineren Schwingungsamplituden (x) und/oder Frequenzen ergibt.

7. Bedienvorrichtung (10) nach Anspruch 6,
**dadurch gekennzeichnet, dass**
zwei gegenüberliegende Seitenkanten und zwei sich senkrecht dazu gegenüberliegende Seitenkanten der Sensoroberfläche (1) mit jeweils wenigstens einem Piezoaktuator (4) zumindest mittelbar verbunden sind.

8. Bedienvorrichtung (10) nach Anspruch 6 oder 7,
**dadurch gekennzeichnet, dass**
Einrichtungen (11, 12) zur zumindest mittelbaren Ausgabe von akustischen und/oder optischen Signalen vorgesehen sind.

## Claims

1. Method for detecting an operating input performed by at least one finger (3) by identifying different contact points of a contour of the finger (3) using a sensor system on a sensor surface (1), with at least one transmission unit (8) for transmitting a signal to the finger (3) and at least one receiving unit (9) for receiving a signal reflected by the finger (3), wherein a surface vibration (5) is introduced into the sensor surface (1) of the sensor system designed as a fingerprint sensor with at least one actuator (4), by means of which vibration the frictional resistance (F_{R}) between the finger (3) and the sensor surface (1) changes depending on the changing contact points of the contour of the finger (3), wherein the surface vibration (5) is changed over time such that a sequence of larger and smaller vibration amplitudes (x) and/or frequencies is produced in the region below the contact points of the finger (3) on the sensor surface (1).

2. Method according to claim 1,
**characterized in that**
the change in the surface vibration (5) in the region below the contact points of the finger (3) on the sensor surface (1) is carried out abruptly, continuously or according to a predetermined function, in each case to produce a desired haptic effect.

3. Method according to either claim 1 or claim 2,
**characterized in that**
the surface vibration (5) is changed in such a way that the frictional resistance (F_{R}) is changed by the rise and fall of vibration amplitudes (x) and/or frequencies in such a way that the effect of a roller (6) rotatable in one or two dimensions with a detent of its rotational movement (α) is haptically reproduced.

4. Method according to any of claims 1 to 3,
**characterized in that**
the change in the vibration amplitudes (x) and/or frequencies is adaptively adjusted on the basis of a path-time diagram of the movement of the contact points of the contour of the finger (3) on the sensor surface (1), for which purpose the change is increased at least in the case of a movement that does not correspond to the desired haptic effect.

5. Method according to any of claims 1 to 4,
**characterized in that**
at least some of the changes in the vibration amplitudes (x) and/or frequencies are additionally accompanied by acoustic and/or optical signals.

6. Operating device (10) for carrying out the method according to any of claims 1 to 5,
comprising a sensor system for identifying different contact points of a contour of the finger (3) on the sensor surface (1), including a transmission unit (8) for transmitting a signal to the finger (3) and at least one receiving unit (9) for receiving a signal reflected by the finger (3), wherein
at least two side edges of the sensor surface (1) of the sensor system designed as a fingerprint sensor are each at least indirectly connected to at least one piezo actuator (4), wherein the piezo actuators (4) introduce a surface vibration such that the frictional resistance (F_{R}) between the finger (3) and the sensor surface (1) changes depending on the changing contact points of the contour of the finger (3), wherein
the surface vibration (5) is changed over time such that a sequence of larger and smaller vibration amplitudes (x) and/or frequencies is produced in the region below the contact points of the finger (3) on the sensor surface (1).

7. Operating device (10) according to claim 6,
**characterized in that**
two opposite side edges and two perpendicularly opposite side edges of the sensor surface (1) are each at least indirectly connected to at least one piezo actuator (4).

8. Operating device (10) according to either claim 6 or claim 7,
**characterized in that**
apparatuses (11, 12) for at least indirectly outputting acoustic and/or optical signals are provided.

## Revendications

1. Procédé pour la détection d'une entrée de manipulation réalisée avec au moins un doigt (3) par la reconnaissance de différents points d'appui d'un contour du doigt (3) par l'intermédiaire d'un système de capteurs sur une surface de capteur (1), comportant au moins une unité d'émission (8) pour l'émission d'un signal vers le doigt (3) et au moins une unité de réception (9) pour la réception d'un signal réfléchi par le doigt (3), dans lequel une vibration de surface (5) est introduite avec au moins un actionneur (4) dans la surface de capteur (1) du système de capteurs réalisé comme un capteur d'empreintes digitales, avec laquelle vibration de surface la résistance au frottement (F_{R}) entre le doigt (3) et la surface de capteur (1) est modifiée en fonction des points d'appui alternés du contour du doigt (3), dans lequel la vibration de surface (5) est modifiée dans le temps de telle sorte qu'il en résulte, dans la zone en dessous des points d'appui du doigt (3) sur la surface de capteur (1), une succession d'amplitudes de vibration (x) et/ou de fréquences plus grandes et plus petites.

2. Procédé selon la revendication 1,
**caractérisé en ce que**
la modification de la vibration de surface (5) dans la zone située en dessous des points d'appui du doigt (3) sur la surface de capteur (1) est effectuée de manière brusque, continue ou selon une fonction prédéfinie, respectivement pour la représentation d'un effet haptique souhaité.

3. Procédé selon la revendication 1 ou 2,
**caractérisé en ce que**
la modification de la vibration de surface (5) est effectuée de telle sorte que, par l'augmentation et la diminution d'amplitudes de vibration (x) et/ou de fréquences, la résistance au frottement (F_{R}) est modifiée de telle sorte que l'effet d'un rouleau (6) pouvant tourner dans une ou deux dimensions avec un crantage de son mouvement de rotation (α) est reproduit de manière haptique.

4. Procédé selon l'une des revendications 1 à 3,
**caractérisé en ce que**
une adaptation de la modification des amplitudes de vibration (x) et/ou des fréquences est effectuée de manière adaptative à l'aide d'un diagramme course-temps du mouvement des points d'appui du contour du doigt (3) sur la surface de capteur (1), moyennant quoi la modification est augmentée au moins dans le cas d'un mouvement ne correspondant pas à l'effet haptique souhaité.

5. Procédé selon l'une des revendications 1 à 4,
**caractérisé en ce que**
au moins certaines des modifications des amplitudes de vibration (x) et/ou des fréquences sont accompagnées, à titre complémentaire, de signaux acoustiques et/ou optiques.

6. Dispositif de manipulation (10) pour la mise en œuvre du procédé selon l'une des revendications 1 à 5,
comportant un système de capteurs pour la détection de différents points d'appui d'un contour du doigt (3) sur la surface de capteur (1), comprenant une unité d'émission (8) pour l'émission d'un signal vers le doigt (3) et au moins une unité de réception (9) pour la réception d'un signal réfléchi par le doigt (3), dans lequel
au moins deux bords latéraux de la surface de capteur (1) du système de capteurs réalisé sous forme de capteur d'empreintes digitales sont reliés au moins indirectement à respectivement au moins un actionneur piézoélectrique (4), dans lequel les actionneurs piézoélectriques (4) introduisent une vibration de surface de telle sorte que la résistance au frottement (F_{R}) entre le doigt (3) et la surface de capteur (1) est modifiée en fonction des points d'appui alternés du contour du doigt (3), dans lequel
la vibration de surface (5) est modifiée dans le temps de telle sorte qu'il en résulte, dans la zone située en dessous des points d'appui du doigt (3) sur la surface de capteur (1), une succession d'amplitudes de vibration (x) et/ou de fréquences plus grandes et plus petites.

7. Dispositif de manipulation (10) selon la revendication 6,
**caractérisé en ce que**
deux bords latéraux opposés et deux bords latéraux de la surface de capteur (1) opposés perpendiculairement à ceux-ci sont reliés au moins indirectement à respectivement au moins un actionneur piézoélectrique (4).

8. Dispositif de manipulation (10) selon la revendication 6 ou 7,
**caractérisé en ce que**
des appareils (11, 12) sont prévus pour la sortie au moins indirecte de signaux acoustiques et/ou optiques.
